## Europäisches Patentamt

## European Patent Office

## Office européen des brevets

(19)

(11) Veröffentlichungsnummer: **0 012 825**
**B1**

(12)
# EUROPÄISCHE PATENTSCHRIFT

(45) Veröffentlichungstag der Patentschrift:
31.03.82

(51) Int. Cl.³: **C 08 L 83/04**

(21) Anmeldenummer: **79104416.7**

(22) Anmeldetag: **09.11.79**

(54) **Bei Raumtemperatur aushärtende Silikonkautschukmasse.**

(30) Priorität: **21.12.78 DE 2855192**

(43) Veröffentlichungstag der Anmeldung:
**09.07.80 Patentblatt 80/14**

(45) Bekanntmachung des Hinweises auf die Patenterteilung:
**31.03.82 Patentblatt 82/13**

(84) Benannte Vertragsstaaten:
**AT BE FR GB IT NL SE**

(56) Entgegenhaltungen:
**DE-A-2 044 684**
**DE-B-1 102 393**
**DE-B-1 671 280**
**DE-B-2 036 720**
**GB-A-1 010 064**
**US-A-3 730 931**

(73) Patentinhaber: **Th. Goldschmidt AG,**
**Goldschmidtstrasse 100, D-4300 Essen (DE)**

(72) Erfinder: **Dietrich, Heinz, Dr., Am Bechenbuckel 3,**
**D-6904 Ziegelhausen (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

## Bei Raumtemperatur aushärtende Silikonkautschukmasse

Die Erfindung betrifft einen bei Raumtemperatur unter Feuchtigkeitseinwirkung aushärtenden Silikonkautschuk oder diesen enthaltende Massen mit einem Gehalt an Polyvinylchlorid oder dessen Copolymerisaten neben üblichen Zusatzstoffen, wie Beschleunigern, Füllstoffen etc.

Bei Raumtemperatur zu Silikonkautschuk aushärtende Siloxanmassen haben erhebliche technische Bedeutung zum Umhüllen von Formkörpern, z. B. elektrischen Schaltungselementen, zum Überziehen von Substraten oder zur Herstellung von Filmen oder geformten Gegenständen erlangt. Man verwendet sie auch als Bauhilfsmittel, insbesondere zum Ausfüllen von Bauwerksfugen, z. B. von Fugen zwischen aus Beton bestehenden Bauelementen oder als Abdichtungsmasse, anstelle des bisher genutzten Kittes beim Einsetzen von Glasscheiben in Fensterrahmen.

Als Siloxan-Komponenten verwendet man im allgemeinen Siloxane, die endständig Hydroxyl-Gruppen aufweisen. Diese Siloxandiole werden mit Silanen vernetzt, welche mindestens drei mit SiOH-Gruppen reaktionsfähige Gruppen aufweisen.

Verwendet man als reaktive Silane Trialkoxysilane oder Tetraalkoxysilane, erfolgt die Vulkanisation in Gegenwart von Katalysatoren, wie z. B. Dibutylzinndilaurat, unmittelbar nach dem Vermischen in der Kälte in Gegenwart von Spuren von Wasser. Man mischt deshalb bei der Ausnutzung dieses Vernetzungsprinzips das Polysiloxanol erst unmittelbar vor Gebrauch mit dem aus tri- oder tetrafunktionellem Silan (Vernetzer) und Zinnkatalysator bestehendem Härtergemisch und bezeichnet dieses Verfahren deshalb als Zweikomponenten-Verfahren.

Durch Verbindung von Silanen mit anderen reaktiven funktionellen Gruppen erhält man besser lagerfähige Produkte, wobei bereits bei der Herstellung die Polysiloxan- und Vernetzer-Komponenten zusammen mit dem Katalysator vermischt werden können und unter Luft- und Feuchtigkeitsabschluß über längere Zeit lagerstabil sind. Geeignete Vernetzer der Komponenten sind z. B. Organotriacyloxysilane, wie sie z. B. in der DE-AS 1 121 803 beschrieben sind, N-silylsubstituierte Carbonsäureamide, deren Verwendung in der DE-AS 1 224 039 erläutert ist, Triaminosilane, entsprechend der DE-AS 1 260 140 oder Organosiliciumverbindungen mit Oxim-Gruppen, deren Herstellung der DE-AS 1 301 140 entnommen werden kann.

Diese sogenannten Einkomponenten-Systeme härten spontan bei Raumtemperatur aus, wenn sie der Einwirkung von Wasser in beliebiger Form, z. B. der Luftfeuchtigkeit, ausgesetzt sind.

Zur Beeinflussung der anwendungstechnischen Eigenschaften, aber auch zur Verbilligung dieser Siloxanmassen werden ihnen häufig Streckmittel und/oder Füllstoffe zugesetzt.

Die Streckmittel können in Form eines physikalischen Gemisches in der Siloxanmasse enthalten sein. Sie können auch auf die Siloxanmatrix aufgepfropft werden. Eine zusammenfassende Abhandlung des Standes der Technik, insbesondere der chemisch an die Siloxanmatrix gebundenen Modifizierungsmittel, findet sich in der Zeitschrift »GAK« (Gummi, Asbest, Kunststoffe), 1977, Seiten 76 ff.

Die vorliegende Erfindung betrifft Siloxanmassen, welche ein Streckmittel physikalisch zugesetzt enthalten, das keine Bindung an die Siloxanmatrix hat. Es ist bekannt, als physikalische Streckmittel z. B. Silikonöle zu verwenden. Diese beeinflussen die anwendungstechnischen Eigenschaften der Siloxanmassen, z. B. im Sinne einer Weichmachung oder einer dynamischen Dämpfung der Vulkanisate (»Chemie und Technologie der Silikone« von W. Noll, Verlag Chemie, Weinheim, 1968, Seite 347). Ein Nachteil der Silikonöle besteht in ihrer hohen Wanderungsfähigkeit, die Anlaß zum Ausschwitzen des Silikonöles aus den Vulkanisaten ist. Dieses führt zu Haftungs- und Verschmutzungsproblemen. Außerdem sind Silikonöle relativ teure Streckmittel.

Der Erfindung liegt nun die Aufgabe zugrunde, ein Streckmittel für die vorgenannten kalt härtenden Silikonmassen zu finden, welches eine gute Haftung der Silikonmassen auf unbehandelten Betonoberflächen bewirkt und das in solcher Menge zugesetzt werden kann, daß sich der Preis der Siloxanmassen so erniedrigt, daß sie in großem Umfang zum Ausfüllen von Bauwerksfugen eingesetzt werden können.

Diese Aufgabe wird erfindungsgemäß dadurch gelöst, daß man das Polyvinylchlorid oder dessen Copolymerisat in dem reaktiven Siloxan in Mengen von 30 bis 70 Gew.-%, bezogen auf das Siloxan, in Form eines Plastisols dispergiert und in diesem ausgeliert.

Es war dabei überrraschend, daß so nicht nur die guten Eigenschaften des reinen Silikonkautschuks erhalten bleiben, sondern diese darüber hinaus sogar verbessert werden. Durch den Einsatz des Polyvinylchlorids als Plastisol und das anschließende Ausgelieren des Polyvinylchlorids wird die Anwendung des Silikonkautschuks auf dem Gebiet der Fugensanierung wirtschaftlich besonders interessant. Es hat sich dabei gezeigt, daß die Haftung eines so gestreckten Silikonkautschuks auf nicht geprimertem Beton erheblich verbessert wird. Durch die eindispergierten Weich-Polyvinylchlorid-Teilchen haben die so gestreckten Silikonkautschukmassen ein gewisses visko-elastisches Verhalten. Beim Einsatz des erfindungsgemäßen Silikonkautschuks als Fugendichtmasse wird aufgrund ihrer weichelastischen Einstellung bei den auftretenden Dehnbewegungen eine übergroße Belastung der Haftflächen vermieden und somit eine dauerhafte Abdichtung sichergestellt.

Die Verarbeitung eines solchen Silikonkautschuks mit Kartuschen wird erheblich erleichtert, da die Extrudiereigenschaften verbessert sind; die Extrudiergeschwindigkeit wird wesentlich erhöht. Auch wird durch den Gehalt an ausgeliertem Polyvinylchlorid der sogenannte Weißbruch, der manchmal beim Dehnungsvorgang entsteht, vermieden, weil das ausgelierte Polyvinylchlorid jede Dehnbewegung mitmacht, ohne sich dabei von der Elastomermatrix zu lösen. Dies ist ein wesentlicher Vorteil gegenüber dem Zusatz von starren Füllstoffen, die diese Eigenschaften nicht aufweisen.

Beim Strecken von Silikonkautschuk mit gemahlenen Kunststoffen oder Elastomeren wurden z. B. Massen erhalten, die nach dem Aushärten eine unruhige, narbige Oberfläche zeigten, die dann stark zum Verschmutzen neigten. Dieser Nachteil wird durch das erfindungsgemäß eingebrachte ausgelierte Polyvinylchlorid vermieden. Durch die Verwendung eines Polyvinylchlorid-Plastisols und infolge des Gelierens der dispergierten Polyvinylchlorid-Teilchen erhält man einen Füllstoff mit äußerst geringer Teilchengröße. Dadurch erscheint die Oberfläche einer ausgehärteten Masse völlig glatt.

Der Zusatz von Polyvinylchlorid zu Silikonmassen ist bekannt. So kennt man aus der DE-AS 1 102 393 ein Verfahren zur Herstellung von geformten Gebilden auf der Grundlage von Silikonkautschuk, bei dem eine Polyvinylchloridpaste einem Silikonkautschuk zugesetzt wird. Diese so gestreckten Organopolysiloxanmassen dienen als Überzugsmassen für Kabel und verbessern dabei insbesondere die Wetterbeständigkeit und die Ozonbeständigkeit. Es wird hier jedoch ausdrücklich darauf hingewiesen, daß sich aufgrund des Zusatzes von Polyvinylchlorid die mechanischen Eigenschaften des Silikonkautschuks verschlechtern. Bei dem erfindungsgemäßen Silikonkautschuk bleiben die mechanischen Eigenschaften eines reinen Silikonkautschuks aber nicht nur erhalten, sondern werden sogar verbessert.

Aus der DE-AS 2 036 720 geht weiter der Einsatz von Vinylchloridcopolymerisaten in Form von Hohlperlen in Organopolysiloxangieß- bzw. -knetmassen hervor. Die so gefüllte Organosiloxanmasse wird in Form eines Schaumes am Einsatzort angewendet. Die hier eingesetzten Hohlperlen werden als inerter Füllstoff verwendet und vermindern die Dehnbarkeit, während die erfindungsgemäß mit Polyvinylchlorid gefüllten Silikonkautschukmassen bei ausreichender Festigkeit eine höhere Dehnbarkeit erreichen.

Zur Herstellung des erfindungsgemäßen Polyvinylchlorid enthaltenden Silikonkautschuks wird das Polyvinylchlorid-Plastisol vorzugsweise unter intensivem Rühren in das vernetzbare Polydiorganosiloxan eindispergiert und bei erhöhten Temperaturen ausgeliert. Die Geliertemperatur richtet sich nach der Art des verwendeten Polyvinylchlorids und dem Weichmacher und kann, soweit nicht bekannt, durch einen Vorversuch ermittelt werden. Die erhaltene, äußerst feinteilige Dispersion des Polyvinylchlorids im reaktiven Polysiloxan wird dann mit üblichen Vernetzern, Vulkanisationsmitteln, Beschleunigern und Füllstoffen vermischt. Die so hergestellte Masse wird in Kartuschen gefüllt und ist unter Luft- und Feuchtigkeitsausschluß für lange Zeit lagerfähig. Am Anwendungsort erfolgt die Reaktion der Polydiorganosiloxane mit den Vernetzern unter Einwirkung von Luftfeuchtigkeit bei Raumtemperatur.

Die verwendeten Plastisole sind Dispersionen von Polyvinylchlorid oder seinen Copolymerisaten in geeigneten Weichmachern. Copolymerisatpartner des Polyvinylchlorids können z. B. sein: Vinylacetat, Acrylate, Äthylen-Vinylacetat, Acrylnitril-Butadien. Als Weichmacher können u. a. Dioctyladipat/Dioctylphthalat, Dioctylphthalat; Diisodecylphthalat, aliphatische Phosphorsäureester, aromatische Phosphorsäureester, epoxydiertes Sojaöl, epoxydiertes Leinöl etc. eingesetzt werden.

Das Anpasten und Homogenisieren eines solchen Plastisols geschieht in üblicher, dem Fachmann bekannten Weise. Dieses Plastisol wird nun in ein vernetzbares Polysiloxanol eingerührt. Bevorzugt ist dabei ein Gewichtsverhältnis Siloxan : Polyvinylchlorid-Plastisol wie 70 : 30 bis 30 : 70. Dieses Gemisch wird dann in einem schnell laufenden Rührwerk auf 100 bis 220° C erhitzt, um dabei das Polyvinylchlorid im Weichmacher zu gelieren. Das ausgelierte Polyvinylchlorid liegt im Polysiloxan sehr feinteilig vor. Dabei kann eine mittlere Teilchengröße $\leq 30$ μm erreicht werden.

Man kann auch alle zur Herstellung der Siloxan-Polyvinylchlorid-Plastisol-Dispersion nötigen Bestandteile gleichzeitig in einem heizbaren Reaktor bei zunächst langsamer Rührgeschwindigkeit vermischen, erhitzen, danach kurzfristig schnell rühren und dann abkühlen. Mit Hilfe dieser Variationen ist es möglich, die Form der dispergierten Teilchen zu beeinflussen.

Dieser Polyvinylchlorid-Plastisol-Siloxan-Dispersion können zweckmäßigerweise Dispergierhilfsmittel zugesetzt werden. Dazu gehören feindisperse Füllstoffe auf Basis von Siliciumdioxid. Bevorzugt wird eine flammhydrolysierte Kieselsäure, deren Oberfläche auch durch Alkylsilyl- oder Alkoxysilylgruppen modifiziert, insbesondere hydrophobiert sein kann, verwendet. Eine solche Kieselsäure sollte dabei eine BET-Oberfläche von über 100 m²/g haben. Weiter können Metallsilicate, Tonerden, Metallseifen wie Lithiumstearat etc. eingesetzt werden.

Die so hergestellte Polysiloxan-Polyvinylchlorid-Dispersion wird nun, wie bei der Herstellung einer reinen Silikonmasse üblich, mit bekannten Vernetzungsmitteln und gegebenenfalls weiteren Füllstoffen, wie z. B. feindisperser Kieselsäure, vermischt und unter Feuchtigkeitsausschluß abgefüllt. Die erfindungsgemäße Silikonkautschukmasse ist unter Ausschluß vom Feuchtigkeit lagerfähig. Sie härtet zu Elastomeren bei Raumtemperatur unter der Einwirkung von Wasserdampf, wobei der normale Wassergehalt der Luft ausreicht.

Der erfindungsgemäße Silikonkautschuk eignet sich vorzüglich zur Abdichtung von Bauwerksfugen zwischen Beton-Mauerstein und Kunststein an Fertigteilen, Fassaden, Brückenbauwerken sowie im sonstigen Hochbaubereich.

Im nachfolgenden Beispiel wird die Herstellung der erfindungsgemäßen Silikonkautschukmasse beschrieben.

Beispiel

16,0 kg eines durch Suspensionspolymerisation erhaltenen Polyvinylchlorids eines K-Wertes von 80 und einer Teilchengröße von < 5 μm wird mit 18,0 kg eines epoxydierten Sojaöls als Weichmacher, 4,0 kg eines Acrylnitril-Butadien-Copolymers und 2,0 kg eines Zinnstabilisators homogenisiert. Diese Paste wird in ein, in einem Dissolver vorgegebenen Gemisch, bestehend aus 39,0 kg α,ω-Dihydroxypolydimethylsiloxan der Viskosität von 50 000 cP bei 25° C, 1,0 kg einer durch Flammhydrolyse erhaltenen Kieselsäure einer BET-Oberfläche von 150 m²/g, 1,0 kg der gleichen Kieselsäure, aber mit Methylsilan hydrophobiert (90 m²/g Oberfläche), und 20 kg α,ω-Di(trimethylsiloxy)-polydimethylsiloxan der Viskosität von ca. 1000 cP bei 25°C, bei langsamer Umdrehung der Dissolverscheibe eingerührt. Innerhalb von 30 Minuten wird die Temperatur auf 130°C erhöht. Danach wird die Oberfläche mit Stickstoff gespült und die Rührgeschwindigkeit auf 1800 U/min erhöht. Innerhalb von 10 min steigt die Temperatur auf 180°C, wo sie für weitere 20 min gehalten wird.

Nach dem Abkühlen werden 92,0 kg der erhaltenen Dispersion unter Vakuum (≦40 mbar) mit 4,0 kg der obengenannten hydrophilen Kieselsäure, 4,0 kg Äthyltriacetoxysilan als Vernetzer und 1,0 kg Diacetoxy-di-tert.-butoxysilan während 20 min vermischt. Anschließend werden 30 g Dibutylzinndiacetat zugegeben, nochmals während 10 min unter Vakuum geknetet. Danach wird die Paste in einer automatischen Abfüllmaschine in Kartuschen abgefüllt, in denen sie für mindestens 6 Monate ohne zu vergelen bei Raumtemperatur lagerfähig ist.

Die erhaltene Masse bildet an der Luft innerhalb von 10 bis 20 min eine Haut und härtet mit ca. 1 bis 2 mm pro Tag durch. Die Haftung auf den folgenden Untergründen war teilweise besser als die der handelsüblichen reinen Silikonkautschukdichtungsmassen:

| | Erfindungs-gemäß | Vergleich |
|---|---|---|
| Beton mit Primer | sehr gut | sehr gut |
| Beton ohne Primer | sehr gut | keine Haftung |
| Aluminium eloxiert | sehr gut | gut |

Das Rückstellvermögen dieser Massen betrug über 95%, das der erfindungsgemäßen über 98%.

**Patentansprüche**

1. Bei Raumtemperatur unter Feuchtigkeitseinwirkung aushärtende Silikonkautschukmasse mit Weichmacher enthaltendem Polyvinylchlorid oder dessen Copolymerisaten neben üblichen Zusatzstoffen, wie Beschleunigern, Füllstoffen, dadurch gekennzeichnet, daß sie das Polyvinylchlorid oder dessen Copolymerisate in dem reaktiven Siloxan in Mengen von 30 bis 70 Gew.-%, bezogen auf das Siloxan, in ausgelierter Form enthält.

2. Verfahren zur Herstellung einer Silikonkautschukmasse nach Anspruch 1, dadurch gekennzeichnet, daß man entweder

a) das reaktive Siloxan mit dem Plastisol des Polyvinylchlorids oder dessen Copolymerisaten zusammen mit dem Stabilisator und gegebenenfalls einem Füllstoff vermischt,

das Gemisch in einem schnell laufenden Rührwerk auf 100 bis 220° C bis zur Gelierung des Polyvinylchlorids erhitzt oder

b) die zur Herstellung der Siloxan-Polyvinylchlorid-Plastisol-Dispersion nötigen Bestandteile in einem heizbaren Reaktor bei zunächst langsamer Rührgeschwindigkeit vermischt, sodann auf 100 bis 220° C bis zur Gelierung des Polyvinylchlorids oder dessen Copolymerisaten erhitzt, danach kurzfristig schnell rührt

und das nach a) oder b) erhaltene Produkt abkühlt und anschließend den Vernetzer und Katalysator zumischt.

**Claims**

1. A silicone rubber composition which hardens at room temperature under the action of moisture, and which contains plasticised polyvinyl chloride or its copolymers in addition to customary additives, such as accelerators and fillers, characterised in that it contains, in the reactive siloxane, polyvinyl chloride or its copolymers in a gelled form, in amounts of 30 to 70% by weight relative to the siloxane.

2. A process for the preparation of a silicone rubber composition according to Claim 1, characterised in that either

a) the reactive siloxane is mixed with the plastisol of the polyvinyl chloride or of its copolymers, together with the stabiliser and, optionally, a filler, and the mixture is heated in a vessel stirred at high speed to $100-220°C$ until the polyvinyl chloride gels, or

b) the constituents required to prepare the siloxane/polyvinyl chloride plastisol dispersion are mixed in a reactor, which can be heated, initially at a slow speed of stirring, and are then heated to $100-220°C$ until the polyvinyl chloride or its copolymers gel, after which the mixture is briefly stirred rapidly,

and that the product obtained according to a) or b) is cooled and the crosslinking agent and catalyst are then admixed.

**Revendications**

1. Masse de caoutchouc de silicone durcissant à la température ambiante sous l'action de l'humidité, additionnée de polychlorure de vinyle ou produits de copolymérisation correspondants contenant du plastifiant ainsi que d'additifs usuels tels qu'accélérateurs ou charges, caractérisée par le fait qu'elle contient le polychlorure de vinyle ou les produits de copolymérisation correspondants sous forme gélifiée dans le siloxane réactif, à raison de 30 à 70% en poids relativement au siloxane.

2. Procédé de fabrication d'une masse de caoutchouc de silicone selon la revendication 1, caractérisé par le fait que:

a) ou bien on mélange le siloxane réactif au plastisol de polychlorure de vinyle ou de produits de copolymérisation correspondants en même temps que le stabilisant et éventuellement une charge, on chauffe le mélange dans un agitateur rapide entre 100 et 220°C jusqu'à gélification du polychlorure de vinyle,

b) ou bien on mélange dans un réacteur pouvant être chauffé les constituants nécessaires à la fabrication de la dispersion de siloxane et de plastisol de polychlorure de vinyle, tout d'abord avec agitation lente, ensuite on chauffe entre 100 et 220°C jusqu'à gélification du polychlorure de vinyle ou des produits de copolymérisation correspondants, puis on agite rapidement pendant peu de temps,

et que l'on refroidit le produit obtenu selon a) ou b) et que l'on y mélange ensuite l'agent de réticulation et le catalyseur.